(19) Europäisches Patentamt

European Patent Office

Office européen des brevets

(11) **EP 1 485 266 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **02776661.7**

(22) Anmeldetag: **07.09.2002**

(51) Int Cl.:
**B60K 6/04** (2006.01)

(86) Internationale Anmeldenummer:
**PCT/DE2002/003342**

(87) Internationale Veröffentlichungsnummer:
**WO 2003/062004 (31.07.2003 Gazette 2003/31)**

(54) **VERFAHREN ZUR STEUERUNG EINES HYBRIDANTRIEBES EINES FAHRZEUGES**

METHOD FOR CONTROLLING A HYBRID DRIVE OF A VEHICLE

PROCEDE POUR COMMANDER L'ENTRAINEMENT HYBRIDE D'UN VEHICULE

(84) Benannte Vertragsstaaten:
**DE FR GB IT**

(30) Priorität: **24.01.2002 DE 10202531**

(43) Veröffentlichungstag der Anmeldung:
**15.12.2004 Patentblatt 2004/51**

(73) Patentinhaber: **ROBERT BOSCH GMBH**
**70442 Stuttgart (DE)**

(72) Erfinder: **BISCHOFF, Claus**
**70469 Stuttgart (DE)**

(56) Entgegenhaltungen:
**EP-A- 1 160 119      WO-A-99/46139**

## EP 1 485 266 B1

**Beschreibung**

Die Erfindung betrifft ein Verfahren zur Steuerung eines Hybridantriebes eines Fahrzeuges, wobei der Hybridantrieb als Antriebsmaschinen eine Verbrennungskraftmaschine und wenigstens eine elektrische Maschine umfasst und die Abtriebswellen der Antriebsmaschinen mit einem Antriebsstrang des Fahrzeuges wirkverbindbar sind, wobei bei einer negativen Momentenanforderung (Bremsen) an den Antriebsstrang des Fahrzeuges eine kennfeldbasierte Ansteuerung der wenigstens einen elektrischen Maschine im generatorischen Betriebsmodus erfolgt.

Stand der Technik

Hybridantriebe für Fahrzeuge sind bekannt. Bei den hier angesprochenen Hybridantrieben wird eine Verbrennungskraftmaschine mit wenigstens einer elektrischen Maschine kombiniert, so dass mehrere Antriebsquellen für das Fahrzeug zur verfügung stehen. Entsprechend vorgegebener Anforderungen durch einen Fahrzeugführer können hierbei die Antriebsquellen wahlweise ihre Antriebsmomente in einen Antriebsstrang des Fahrzeuges einspeisen. Hierdurch ergeben sich in an sich bekannter weise in Abhängigkeit konkreter Fahrsituationen unterschiedliche Antriebsgestaltungsmöglichkeiten, die insbesondere der Verbesserung eines Fahrkomforts und der Reduzierung eines Energieeinsatzes sowie der Reduzierung einer Schadstoffemission dienen.

Bei Hybridantrieben für Fahrzeuge sind serielle Anordnungen, parallele Anordnungen und gemischte Anordnungen von Verbrennungskraftmaschine und elektrischen Maschinen bekannt. Je nach Anordnung sind die elektrischen Maschinen direkt oder indirekt in den Antriebsstrang der Verbrennungskraftmaschine schaltbar. Zur Wirkverbindung der Verbrennungskraftmaschine und/oder der elektrischen Maschinen ist bekannt, diese über Getriebe, beispielsweise Planetengetriebe oder dergleichen, und Kupplungen miteinander wirkverbindbar anzuordnen.

Um einen Fahrerwunsch nach einer Antriebsleistung des Hybridantriebes optimal umsetzen zu können, ist eine koordinierte Ansteuerung der Antriebsmaschinen des Hybridantriebes erforderlich, die bekanntermaßen durch ein so genanntes Motorsteuergerät erfolgt. Die Ansteuerung der Antriebsmaschinen kann hierbei basierend auf einem durch das Motorsteuergerät zu bestimmenden Soll-Betriebszustand des Hybridantriebes erfolgen. Ziel bei der Bestimmung dieses Soll-Betriebazustandes ist insbesondere ein geringer Kraftstoffverbrauch, ein dynamisches Fahrverhalten des Fahrzeuges und eine geringe Schadstoffemission.

Ferner ist allgemein bekannt, Fahrzeuge mit einem elektronisch ansteuerbaren Bremssystem, beispielsweise einer elektrohydraulischen Bremse oder einer elektromechanischen Bremse, auszustatten.

Die EP-A-1 160 119 offenbart ein Verfahren zur Steuerung eines Hybridantriebs eines Fahrzeugs, wobei der Hybridantrieb als Antriebsmaschine eine Verbrennungskraftmaschine und wenigstens eine elektrische Maschine umfasst und die Abtriebswellen der Antriebsmaschinen mit einem Antriebsstrang des Fahrzeugs wirkverbindbar sind, wobei bei einer negativen Momemtenanforderung (Bremsen) an den Antriebsstrang des Fahrzeugs eine kennfeldbasierte Ansteuerung der wenigstens einen elektrischen Maschine im generatorischen Betriebsmodus erfolgt.

Vorteile der Erfindung

Das erfindungsgemäße Verfahren mit den in Anspruch 1 genannten Merkmalen bietet den Vorteil, dass mit Hilfe einer Bremsenergieregeneration der Energieverbrauch des Fahrzeuges gesenkt werden kann. Eine maximale Regenerationskennlinie definiert einen Übergang vom regenerativen Betrieb zum kombinierten regenerativen und mechanischen Betrieb. Vorzugsweise werden aus dem Soll-Bremsmoment abgeleitete optimierte Steuergrößen für die wenigstens eine elektrische Maschine abgeleitet. Insbesondere gilt es dabei, mit der generatorisch arbeitenden elektrischen Maschine einen möglichst großen Energieeintrag in das Bordnetz des Fahrzeuges zu erzielen. Insbesondere kann hier eine optimale regenerative Bremsstrategie gefahren werden, wobei durch die kennfeldbasierte Ansteuerung wenigstens einer elektrischen Maschine unterschiedliche Bremsstrategien, insbesondere rein regeneratives Bremsen, gleichzeitiges regeneratives und mechanisches Bremsen oder rein mechanisches Bremsen, realisiert werden können. Jeweils wird unter exakter Umsetzung des gewünschten Soll-Brememomentes eine den gewählten Betriebsmodi entsprechende maximal mögliche Bremsenergieregeneration möglich. Diese kann über den generatorischen Betrieb der elektrischen Maschine in das Bordnetz und gegebenenfalls in eine Kraftfahrzeugbatterie eingespeist werden, so dass für diese gewonnene Bremsenergie kein zusätzlicher externer Energiebedarf, beispielsweise über den Betrieb der Verbrennungskraftmaschine, aufgebracht werden muss. Dies trägt insgesamt zur Reduzierung des Kraftstoffverbrauches und somit zur Reduzierung einer Schadstoffemission des Fahrzeuges bei.

Weitere bevorzugte Ausgestaltungen der Erfindung ergeben sich aus den übrigen, in den Unteransprüchen genannten Merkmalen.

Zeichnungen

Die Erfindung wird nachfolgend in Ausführungsbeispielen anhand der zugehörigen Zeichnungen näher erläutert. Es zeigen:

Figur 1    ein Blockschaltbild zur Steuerung eines Hybridantriebes und Bremssystems eines Fahrzeuges;

Figur 2    eine schematische Ansicht eines Hybridantriebes in einem konkreten Ausführungsbeispiel;

Figur 3    ein Steuerkennfeld einer elektrischen Maschine gemäß dem Ausführungsbeispiel in Figur 2 und

Figur 4    ein Schaltkennfeld eines Getriebes gemäß dem Ausführungsbeispiel in Figur 2.

Beschreibung der Ausführungsbeispiele

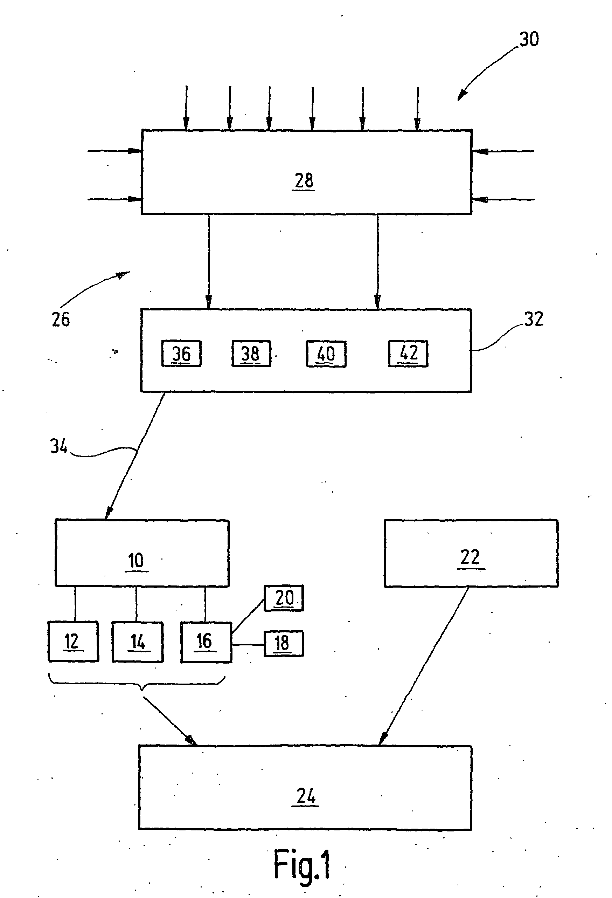

In Figur 1 zeigt schematisch in einem Blockschaltbild einen Antriebsstrang und ein Bremssystem eines Fahrzeuges. Die hier angesprochenen Fahrzeuge umfassen einen Hybridantrieb 10, der eine Verbrennungskraftmaschine 12, ein Getriebe 14 und wenigstens eine elektrische Maschine 16 umfasst. Die elektrische Maschine 16 ist mit einer in ein Bordnetz des Fahrzeuges eingebundenen Traktionsbatterie 18 verbunden, aus der sie im motorischen Betrieb elektrische Energie bezieht beziehungsweise in die sie im generatorischen Betrieb elektrische Energie einspeist. Ferner ist die elektrische Maschine 16 - und auch die Verbrennungskraftmaschine 12 - in einen Kühlkreislauf 20 eingebunden, durch den ein Kühlmedium, beispielsweise Wasser, strömt.

Das Fahrzeug umfasst ferner ein elektronisch ansteuerbares Bremssystem 22, beispielsweise ein elektrohydraulisches oder elektromechanisches Bremssystem. Hybridantrieb 10 und Bremssystem 22 wirken auf eine Antriebsanordnung 24 ein, die insbesondere Antriebswellen, Antriebsachsen, Fahrzeugräder und dergleichen umfasst.

Die Steuerung des Hybridantriebes 10 und des Bremssystems 22 erfolgt durch ein Steuergerät 26. Aufbau, Anordnung und Zusammenwirken von Steuergerät 26, Hybridantrieb 10, Bremssystem 22 und Antriebsanordnung 24 sind allgemein bekannt, so dass hierauf im Rahmen der vorliegenden Beschreibung nicht näher eingegangen wird. Nachfolgend wird insbesondere auf die erfindungsgemäße Steuerung des Hybridantriebes 10 bei einer negativen Momentanforderung an die Antriebsanordnung 24 eingegangen. Diese negative Momentanforderung kann beispielsweise durch ein Betätigen eines Bremspedals oder einen Fahrautomaten erfolgen. Entsprechend dieser negativen Momentanforderung ist ein Soll-Bremsmoment an den Rädern der Antriebsanordnung 24 aufzubringen.

Das Steuergerät 26 umfasst unter anderem eine Schnittstelle 28, über die Signale 30 von Fahrzeugkomponenten empfangbar sind. Hierbei werden insbesondere Signale 30 von einer übergeordneten Fahrzeugsteuerung, von den Aggregaten des Hybridantriebes 10, dem Bremssystem 22 sowie der Antriebsanordnung 24 empfangen. Als Signale 30 werden unter anderem ein Getriebeausgangswellensollmoment $M_A$, die gemittelte Raddrehzahl $n_{Rad}$ der Antriebsachse, ein ESP-Eingriffsflag $ESP_{Flag}$, ein aktueller Batteriestrom $I_{Bat}$, eine Batterieladefreigabe $Bat_{Lad}$, ein aktueller Generatorstrom $I_{Gen}$ und eine Kühlwassertemperatur $T_{Kühl}$ des Kühlkreislaufes 20 bereitgestellt. Das Getriebeausgangswellensollmoment $M_A$ wird beispielsweise aus einer Interpretation eines Fahrpedals und/oder Bremspedals (durch Fahrzeugführer betätigt) oder eines Fahrautomaten gewonnen. Die gemittelte Raddrehzahl und das ESP-Eingriffsflag $ESP_{Flag}$ werden beispielsweise von einem Radschlupfregelsystem geliefert. Die Schnittstelle 28 ermittelt weiterhin eine Ableitung des Ausgangswellensollmomentes $M_A/dt$ und aus der gemittelten Raddrehzahl $n_{Rad}$ eine Referenzgeschwindigkeit v über das Übersetzungsverhältnis zwischen Ausgangswelle des Hybridantriebes 10 und Rad.

Einem Regenerationsstrategieblock 32 werden die den Signalen 30 entsprechenden Informationen weitergegeben. Der Regenerationsstrategieblock 32 liefert dem Hybridantrieb 10 ein Signal 34, das als Steuergrößen ein Soll-Moment $M_{16}$ und eine Soll-Drehzahl $n_{16}$ für die elektrische Maschine 16 und eine Soll-Übersetzung $i_{14}$ für das Getriebe 14 vorgibt. Daneben werden selbstverständlich weitere Größen für die Fahrzeugsteuerung ermittelt und ausgegeben, die jedoch im Rahmen der vorliegenden Beschreibung nicht näher betrachtet werden sollen.

Der Regenerationsstrategieblock 32 umfasst vier Funktionsmodule, nämlich einen fahrzeugspezifischen Strategieblock 36, einen Bremsmodulselektor 38, eine Schaltlogik 40 und eine Aggregatsteuerung 42.

Der Regenerationsstrategieblock 32 sieht für unterschiedliche Betriebszustände der Aggregate des Hybridantriebes 10 und des Gesamtfahrzeuges unterschiedliche Betriebsstrategien vor. Hierzu sind im Bremsmodulselektor 38 Basisbetriebsstrategien vorgesehen. Hierbei wird zunächst zwischen folgenden grundsätzlichen Möglichkeiten unterschieden:

1. rein regeneratives Bremsen an der Antriebsachse, jedoch reicht die mechanische Leistung zum Antrieb der elektrischen Maschine 16 im Generatorbetrieb nicht aus, um Wandlungsverluste der elektrischen Maschine zu decken. Obwohl die elektrische Maschine 16 im Generatorbetrieb arbeitet, muss sie aus dem Bordnetz zusätzlich mit elektrischer Leistung versorgt werden.

2. rein regeneratives Bremsen an der Antriebsachse und die elektrische Maschine 16 befindet sich im Generatorbetrieb und speist elektrische Leistung in das Bordnetz ein.

3. rein regeneratives Bremsen an der Antriebsachse und die elektrische Maschine 16 befindet sich im Generatorbetrieb und speist elektrische Leistung in das Bordnetz und in die Batterie 18 ein.

4. anteiliges regeneratives und mechanisches Bremsen an der Antriebsachse. Die Leistung der elektrischen Maschine 16 reicht nicht aus, um das volle Soll-Verzögerungsmoment für das Fahrzeug aufzubringen. Die elektrische Maschine 16 befindet sich im Generatorbetrieb und speist elektrische Leistung in das Bordnetz und in die Batterie 18 ein. Die mechanische Bremse übernimmt die Soll-Ist-Differenz.

5. rein mechanisches Bremsen.

Der Bremsmodulselektor 38 aktiviert Betriebsmodi in Abhängigkeit von den an der Schnittstelle 28 anliegenden Signalen 30 unter Zuhilfenahme der nachfolgenden Entscheidungsmatrix (0=nein, 1=ja):

| | $Bat_{rek}$ | $M_{Awlsoll} > M_{Awlmax}$ | $ESP_{Flag}$ | $I_{Gen} > 0$ | $T_{Kühl} < T_{Kühlsoll}$ | $I_{Bat} < 0$ |
|---|---|---|---|---|---|---|
| Modus 1 | 0,1 | 0 | 0 | 1 | 1 | 0 |
| Modus 2 | 0 | 0 | 0 | 0 | 0,1 | 0 |
| Modus 3 | 1 | 0 | 0 | 0 | 0,1 | 1 |
| Modus 4 | 1 | 1 | 0 | 0 | 0,1 | 1 |
| Modus 5 | In allen übrigen Fällen, und falls $FRek_{Flag}=1$ | | | | | |

Nur wenn in einer Bremssituation kein ESP-Eingriff erfolgt, das heißt $ESP_{Flag}=0$, und kein Fehler an den beim regenerativen Bremsen aktiven Aggregaten vorliegt, das heißt $FRek_{Flag}=0$, ist regeneratives Bremsen nach einem der Betriebsmodi 1 bis 4 zulässig. Im Betriebsmodus 1 kann keine elektrische Energie gewonnen werden. Es muss Batterieleistung aufgewendet werden, um die gewünschte Verzögerungsleistung aufzubringen. Dieser Modus ist beispielsweise nach einer Kaltstartphase des Hybridantriebes 10 sinnvoll, um das Kühlmedium des Kühlkreislaufes 20 auf optimale Betriebstemperatur zu bringen.

Hat das Kühlmedium eine geeignete Kühlmitteltemperatur, wird nur dann regenerativ gebremst, wenn der Generatorstrom $I_g$ negativ ist, das heißt, die elektrische Maschine 16 kann effektiv elektrische Leistung abgeben. Solange die regenerierte Leistung die von den Bordnetzverbrauchern angeforderte Leistung nicht übersteigt, das heißt $I_{Bat}>0$, kann das regenerative Bremsen auch ohne Ladebereitschaft an der Batterie erfolgen ($Bat_{rek}=0$). Dann wird der Betriebsmodus 2 ausgewählt.

Wird ein Ladestrom an der Batterie 18 detektiert, muss eine Ladebereitschaft Batterie ($Bat_{rek}=1$) vorliegen. In diesem Fall wird der Betriebsmodus 3 aktiviert. Ist dies nicht gegeben, muss das Moment der elektrischen Maschine 16 so begrenzt werden, dass der Betriebsmodus 2 wieder erreicht wird.

Steigt die Verzögerungsleistung auf Werte über der maximalen Regenerationsmomentenkennlinie $M_{Amax}$ (abhängig von der Fahrzeuggeschwindigkeit v), muss das Überschussmoment $M_{Aüber}=M_{Asoll}-M_{Amax}$ durch das Bremssystem 22 aufgebracht werden. Dann wird Betriebsmodus 4 angefahren.

Die Aggregatsteuerung 42 gibt die Steuergrößen (Signale 34; Soll-Moment und Soll-Drehzahl) für die elektrische Maschine 16 vor. Hierbei wird durch die Aggregatesteuerung 42 eine kennfeldbasierte Auswahl der Steuergrößen in Abhängigkeit des Soll-Momentes $M_{Asoll}$ und der Fahrzeuggeschwindigkeit v ausgewählt. Die Steuerkennfelder sind hierbei so ausgelegt, dass für ein gefordertes Soll-Moment $M_{Asoll}$ und die aktuelle Fahrzeuggeschwindigkeit v der Generatorstrom $I_g$ der elektrischen Maschine 16 maximal ist.

Die Aggregatsteuerung 42 berücksichtigt ferner eine Kennlinie für das Maximalmoment, wobei die maximale Regenerations-Momentkennlinie sich aus der Beziehung

$$M_{MaxReg}(v_{Fzg}) = \min(M_{MaxGen}(v_{Fzg}),\ M_{maxLad}(v_{Fzg}))$$

ergibt. Hierbei stellt $M_{MaxGen}(v)$ die maximale Momentenkennlinie der elektrischen Maschine 16 'dar und $M_{maxLad}(v)$ die Momente, bei denen der maximale Batterieladestrom $I_{Bat}$ erzeugt werden kann. Es kann auch eine minimale Grenzmomentkennlinie $M_{MinReg}(v)$ berücksichtigt werden. Diese minimale Grenzmomentkennlinie grenzt die Betriebsmodi 2 und 3 voneinander ab. Hierdurch ergibt sich eine Grenzlinie zwischen den Betriebsmodi, die einen aktiven Eintrag elektrischer Leistung in das Bordnetz ermöglichen, und solchen, die das Bordnetz mit elektrischer Leistung belasten.

Die Steuerkennfelder und die Maximalmomentenkennlinie der Aggregatsteuerung 42 können anhand bekannter Parameter des Hybridantriebes 10 vorab ermittelt und/oder berechnet werden und in entsprechenden Speichermodulen innerhalb des Regenerationsstrategieblockes 32 abgelegt sein.

Die Steuerkennfelder und Maximalmomentenkennlinien müssen hierbei für jede der möglichen zulässigen Übersetzungsverhältnisse i des Getriebes 14 bestimmt und abgespeichert sein. Die Auswahl erfolgt dann anhand des tatsächlichen Übersetzungsverhältnisses i des Getriebes 14, wobei hierauf durch die Schaltlogik 40 Einfluss genommen werden kann.

Die Schaltlogik 40 kann bewirken, dass durch Gangwechsel der generatorische Wirkungsgrad der elektrischen Maschine 16 verbessert werden kann, wenn sich diese im generatorischen Betrieb befindet und mit dem Getriebe 14 wirkverbunden ist.

Die für regenerative Bremsvorgänge optimalen Übersetzungen, beispielsweise Soll-Gänge, sind in einem Schaltkennfeld abgelegt, das als Parameter das Soll-Ausgangsmoment $M_{Asoll}$ und die aktuelle Fahrzeuggeschwindigkeit v nutzt. Diese Schaltkennfelder sind ebenfalls in Speichermodulen der Regenerationsstrategieblocks 32 abgelegt.

Das Schaltkennfeld wird für alle Betriebspunkte, die mit mehreren Gängen oder mehreren Schaltstufen dargestellt werden können, unter Zuhilfenahme einer Optimierung ermittelt. Hierzu kann beispielsweise der Generatorstrom $I_g$ mittels der Steuerkennfelder der Aggregatesteuerung 42 für jede zulässige Übersetzung berechnet werden und dann diejenige Übersetzung als wirkungsgradoptimal abgelegt werden, bei der der maximale Generatorstrom $I_g$ realisierbar ist.

Ist in der übergeordneten Fahrzeugsteuerung ein Schaltprogramm für das Antreiben hinterlegt, so ist ein Abgleich der aktuellen Soll-Übersetzung des Getriebes 14 für das regenerative Bremsen mit der Soll-Übersetzung des Getriebes 14 für den Antriebsfall bei einer Konstantfahrt mit der aktuellen Fahrzeuggeschwindigkeit v vorzunehmen. So kann vorgesehen sein, nur eine Gangstufe Differenz zwischen den beiden Soll-Übersetzungen zuzulassen. Hierdurch wird verhindert, dass ein unnötig hoher Gangwechselaufwand beim Umschalten vom Bremsbetrieb in den Antriebsbetrieb des Fahrzeuges erforderlich ist.

Liegt das Soll-Verzögerungsmoment an der Antriebsachse unter einem vorgebbaren Schwellenwert und/oder ist ein Gradient des Soll-Verzögerungsmomentes positiv, das heißt, eine Betätigung des Bremspedals wird zurückgenommen, wird beim regenerativen Bremsen auf die Soll-Übersetzung des Getriebes 14 zum Antreiben umgeschaltet. Durch den positiven Gradienten des Verzögerungsmomentes wird angezeigt, dass durch den Fahrer oder einen Fahrautomaten wieder ein Vortrieb des Fahrzeuges angefordert wird.

Der fahrzeugspezifische Parameter- beziehungsweise Strategieblock 36 enthält fahrzeug- und antriebsstrangspezifische Informationen, wie beispielsweise die Soll-Kühlwassertemperatur $T_{KühlSoll}$ oder den maximalen Batterieladestrom $I_{BatMax}$. Ferner können zusätzliche, fahrzeugspezifische Entscheidungskriterien für die Auswahl der Betriebsmodi durch den Bremsmodulselektor 38 vorgehalten sein.

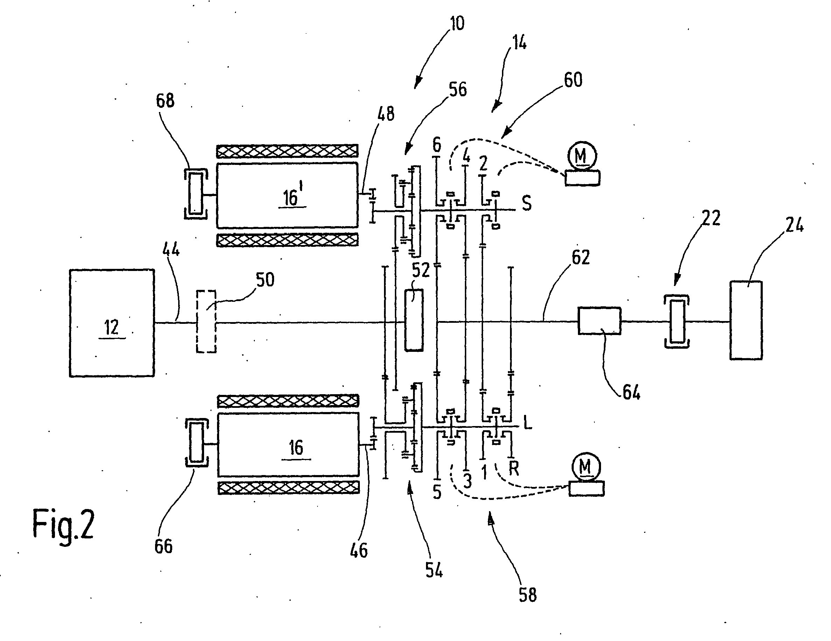

Figur 2 zeigt schematisch einen Hybridantrieb 10 in einer konkreten Ausführungsform, anhand der die Umsetzung der Bremsenergieregenerationsstrategie verdeutlicht werden soll. Bei dem hier dargestellten Hybridantrieb 10 handelt es sich um einen so genannten leistungsverzweigenden Dual-E-Antrieb. Der Hybridantrieb 10 umfasst die Verbrennungskraftmaschine 12, die erste elektrische Maschine 16 sowie eine zweite elektrische Maschine 16'. Eine Kurbelwelle 44 der Verbrennungskraftmaschine 12 und Antriebswellen 46 beziehungsweise 48 der elektrischen Maschinen 16, 16' sind mit dem Getriebe 14 wirkverbunden. Die Kurbelwelle 14 ist hierbei noch mit einem Zweimassenschwungrad 50 sowie einem Freilauf 52 gekoppelt.

Die Antriebswelle 46 der elektrischen Maschine 16 ist mit einem ersten Planetengetriebe 54 und die Antriebswelle 48 der elektrischen Maschine 16' mit einem zweiten Planetengetriebe 56 verbunden. Ein Hohlrad des Planetengetriebes 54 ist mit einem Schaltgetriebe 58 und ein Hohlrad des Planetengetriebes 56 mit einem Schaltgetriebe 60 verbunden. Die Schaltgetriebe 58 und 60 wiederum sind mit einer Abtriebswelle 62 der Getriebeanordnung 14 wirkverbunden. Die Abtriebswelle 62 ist über ein Achsgetriebe 64 sowie dem Bremssystem 22, mit der Antriebsanordnung 24 wirkverbunden.

Aufbau und Wirkungsweise eines derartigen Hybridantriebes 10 sind allgemein bekannt, so dass im Rahmen der vorliegenden Beschreibung hierauf nicht näher eingegangen wird. Insbesondere kann durch gezielte Ansteuerung der Verbrennungskraftmaschine 12 und/oder der elektrischen Maschinen 16, 16' von diesen ein unterschiedliches Antriebsmoment auf die Abtriebswelle 62 abgefordert werden. Somit lassen sich verschiedene Betriebsmodi des Hybridantriebes 10 einstellen. Die Schaltgetriebe 58 und 60 gestatten durch Betätigen eines Schaltgebers in bekannter Weise das Einlegen unterschiedlicher Gänge, die hier mit den Gängen 1, 2, 3, 4, 5 und 6 sowie mit einem Rückwärtsgang R bezeichnet sind. Die elektrischen Maschinen 16,16' können auch jeweils im Generatorbetrieb betrieben werden und dienen beispielsweise der Bereitstellung einer Bordnetzspannung des Kraftfahrzeuges und dem Aufladen der Kraftfahrzeugbatterie 18. Den elektrischen Maschinen 16 sind jeweils Bremseinrichtungen 66 und 68 zugeordnet, mit denen Rotoren der elektrischen Maschinen 16 mechanisch gebremst werden können.

Mittels des Bremssystems 22 kann ein mechanisches Bremsen des Antriebsstranges 24 erfolgen. Bei Standardantrieben für Fahrzeugen wird an einer Vorderachse üblicherweise immer mechanisch gebremst, so dass nur ein Verzögerungsanteil der von sich im Generatorbetrieb befindenden elektrischen Maschine 16 aufgebrachten Verzögerungsmoment an der Hinterachse ganz oder teilweise regeneriert und in das Bordnetz des Fahrzeuges eingespeist werden kann.

Bezogen auf die anhand Figur 1 erläuterten allgemeinen Zusammenhänge für die erfindungsgemäße Bremsenergieregeneration ergeben sich folgende Modifikationen.

Die Schnittstelle 28 erhält zusätzlich Signale 30, die den aktuellen Ist-Momenten der elektrischen Maschinen 16 und 16' entsprechen. Die möglichen Betriebsmodi, die durch den Bremsmodulselektor 38 ausgewählt werden, gelten auch für diese konkrete Ausgestaltung des Hybridantriebes 10.

Die Schaltlogik 40 kann Einfluss auf die Schaltstufe des Getriebes 14 nehmen. Bei der konkreten Ausführungsvariante gemäß Figur 2 sind insgesamt fünf Fahrstufen möglich. Figur 4 zeigt ein Schaltkennfeld für das Getriebe 14, wobei die Schaltstufen 2, 3 und 4 bezeichnet sind, welche für das regenerative Bremsen mit den entsprechenden Betriebspunkten, die abhängig von dem Ausgangssollmoment $M_A$ und der Fahrzeuggeschwindigkeit v sind, geeignet sind.

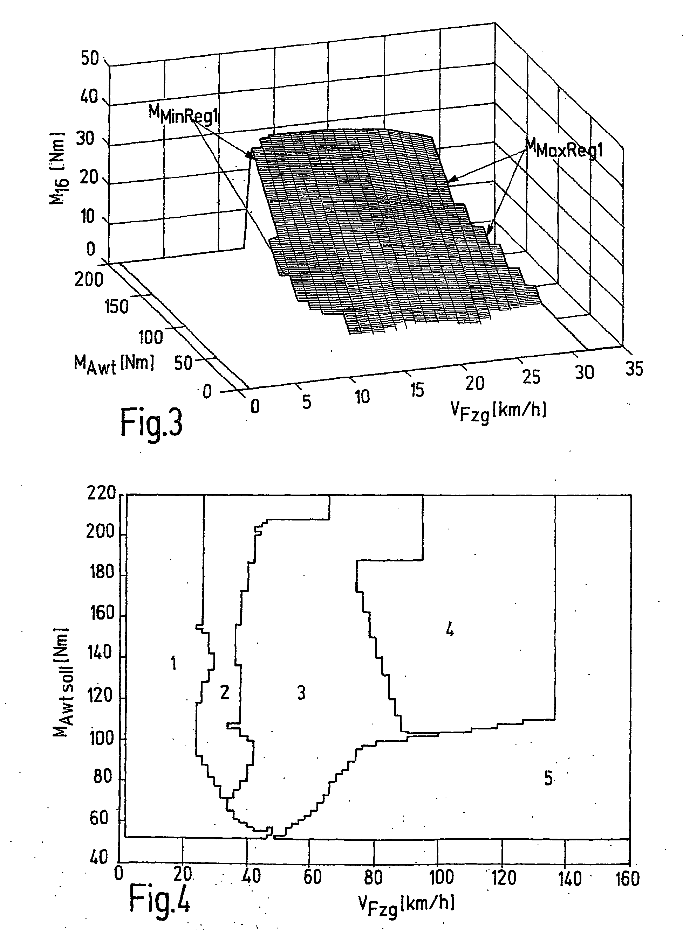

Die Aggregatsteuerung 42, die die Steuergrößen für die elektrische Maschine 16 vorgibt, arbeitet mit dem beispielsweise in Figur 3 dargestellten Steuerkennfeld. Dieses Steuerkennfeld der elektrischen Maschine 16 ist bezogen auf die Fahrstufe 2 des Getriebes 14. In dem Steuerkennfeld sind die Grenzmomentenkennlinien eingetragen, die für das Maximalmoment $M_{MaxReg1}$ und das Minimalmoment $M_{MinReg1}$ gelten. Abhängig von dem Getriebeausgangswellensollmoment $M_A$ und der Fahrzeuggeschwindigkeit v ergibt sich aus dem Steuerkennfeld ein Sollmoment $M_{16}$ für die elektrische Maschine 16.

Da gemäß dem Ausführungsbeispiel in Figur 2 der Hybridantrieb 10 über zwei elektrische Maschinen 16, 16' verfügt (die Abbildung in Figur 3 bezieht sich nur auf das Steuerkennfeld der einen elektrischen Maschine 16), ergeben sich absolute maximale Grenzmomentkennlinien und absolute minimale Grenzmomentkennlinien, ab der die elektrischen Maschinen 16 und 16' einen effektiven Eintrag ins Bordnetz leisten können als Summe von $M_{Max16}$ und $M_{Max16'}$ beziehungsweise $M_{Min16}$ und $M_{Min16'}$.

Im Bremsregenerationsfall verfügt der Hybridantrieb 10 gemäß Figur 2 über einen kontinuierlichen und einen diskreten Freiheitsgrad. Der kontinuierliche Freiheitsgrad richtet sich der Momentenaufteilung auf die elektrischen Maschinen 16 beziehungsweise 16'. Der diskrete Freiheitsgrad richtet sich nach der Wahl der Fahrstufe des Getriebes 14. Durch die Vorgabe des Soll-Momentes $M_{16}$ der elektrischen Maschine 16 über das Steuerkennfeld gemäß Figur 3 und eine Soll-Fahrstufe durch die Schaltlogik 40 gemäß dem Schaltkennfeld gemäß Figur 4 sind die Betriebspunkte für den Bremsregenerationsfall festgelegt.

Der fahrzeugspezifische Strategieblock 36 für den Hybridantrieb 10 gemäß dem Ausführungsbeispiel in Figur 2 enthält beispielsweise als optimale Kühlmitteltemperatur den Wert $T_{Kühl} = 90\ °C$ und für den maximalen Batteriestrom den Wert $I_{Bat} = 500\ A$.

Ferner werden die Ist-Momente der elektrischen Maschinen 16, 16' mit den Soll-Momenten $M_{16}$, $M_{16}$, verglichen. Liegt das Ist-Moment unter den Soll-Werten, wird davon ausgegangen, dass das Moment der elektrischen Maschinen 16, 16' selbsttätig begrenzt wurde, beispielsweise durch die die elektrischen Maschinen 16, 16' ansteuernden Pulswechselrichter. Dies kann der Fall sein, wenn eine Überspannung im Bordnetz vorliegt. In diesem Fall wird das Sollgetriebeausgangsmoment $M_A$ durch das Ist-Moment der elektrischen Maschinen 16 ersetzt und dieses reduzierte Ist-Moment über das Motorsteuergerät 26 an das elektronisch betätigbare Bremssystem 22 gemeldet. Liegt das Ist-Moment der elektrischen Maschinen 16 und 16' über den Soll-Wertvorgaben oder das Ist-Moment den Wert 0, so wird auf einen Fehler erkannt und der interne Fehlerflag $FRek_{Flag}$ wird auf 1 gesetzt, so dass durch den Regenerationsstrategieblock 32 die Betriebsmodi 1 bis 4 nicht vorgegeben werden können.

## Patentansprüche

1. Verfahren zur Steuerung eines Hybridantriebes eines Fahrzeuges, wobei der Hybridantrieb als Antriebsmaschinen eine Verbrennungskraftmaschine und wenigstens eine elektrische Maschine umfasst und die Abtriebswellen der Antriebsmaschinen mit einem Antriebsstrang des Fahrzeuges wirkverbindbar sind, wobei bei einer negativen Momentenanforderung an den Antriebsstrang des Fahrzeuges eine kennfeldbasierte Ansteuerung der wenigstens einen elektrischen Maschine im generatorischen Betriebsmodus erfolgt, **dadurch gekennzeichnet, dass** eine maximale Regenerationskennlinie einen Übergang vom regenerativen Betrieb zum kombinierten regenerativen und mechanischen Betrieb definiert.

2. Verfahren nach Anspruch 1, **dadurch gekennzeichnet, dass** die Ansteuerung der wenigstens einen elektrischen Maschine (16) in Abhängigkeit von einem Soll-Bremsmoment ($M_{ASoll}$) und einer Fahrzeuggeschwindigkeit (v) erfolgt.

3. Verfahren nach einem der vorhergehenden Ansprüche, **dadurch gekennzeichnet, dass** die Ansteuerung von einem Regenerationsstrategieblock (32) erfolgt, der über eine Schnittstelle (28) die erforderlichen Signale (30) erhält und der über Funktionsmodule (36, 38, 40, 42) verfügt, die Steuersignale (34) für die wenigstens eine elektrische Maschine (16) generieren.

4. Verfahren nach Anspruch 3, **dadurch gekennzeichnet, dass** ein Bremsmodulselektor (38) in Abhängigkeit von den an der Schnittstelle (28) anliegenden Signalen (30) wahlweise unterschiedliche Betriebsmodi für das Bremsen aktiviert.

5. Verfahren nach einen der vorgehenden Ansprüche, **dadurch gekennzeichnet, dass** als Betriebsmodi rein regeneratives Bremsen, kombiniertes regeneratives und mechanisches Bremsen und rein mechanisches Bremsen zur Verfügen stehen.

6. Verfahren nach einem der vorhergehenden Ansprüche, **dadurch gekennzeichnet, dass** eine Aggregatesteuerung (42) ein Soll-Moment ($M_{16}$) und/oder eine Soll-Drehzahl ($n_{16}$) für die wenigstens eine elektrische Maschine (16) als Steuersignale (34) vorgibt.

7. Verfahren nach Anspruch 6, **dadurch gekennzeichnet, dass** die Steuersignale (34) aus einem Steuerkennfeld ausgelesen werden.

8. Verfahren nach Anspruch 7, **dadurch gekennzeichnet, dass** die Steuerkennfelder (34) als Parameter einen maximalen Generatorstrom ($I_c$) der elektrischen Maschine (16) berücksichtigen.

9. Verfahren nach einem der vorhergehenden Ansprüche, **dadurch gekennzeichnet, dass** die Steuerkennfelder von Grenzkennlinien eingegrenzt sind, die den Betriebsbereich der Bremsenergieregeneration begrenzen.

10. Verfahren nach einem der vorhergehenden Ansprüche, **dadurch gekennzeichnet, dass** eine minimale Regenerationskennlinie einen Übergang definiert, bei dem ein aktiver Eintrag elektrischer Leistung in ein Bordnetz möglich ist oder das Bordnetz mit elektrischer Leistung belastet ist.

11. Verfahren nach einem der vorhergehenden Ansprüche, **dadurch gekennzeichnet, dass** eine Schaltlogik (40) eine Schaltstufe eines Getriebes (14) auswählt, mit der ein optimierter generatorischer Wirkungsgrad der elektrischen Maschine (16) erzielbar ist.

12. Verfahren nach Anspruch 11, **dadurch gekennzeichnet, dass** die Schaltlogik (40) auf Schaltkennfelder zurückgreift.

13. Verfahren nach einem der vorhergehenden Ansprüche, **dadurch gekennzeichnet, dass** die Schaltlogik (40) von einer übergeordneten Fahrzeugsteuerung vorgegebene Ist-Schaltstufen berücksichtigt, insbesondere bei Abweichungen von mehr als einer Schaltstufe, die Bremsregenerationsschaltstufen nachführt.

14. Verfahren nach einem der vorhergehenden Ansprüche, **dadurch gekennzeichnet, dass** die Schaltlogik (40) einen Gradienten des Soll-Verzögerungsmomentes berücksichtigt.

15. Verfahren nach einem der vorhergehenden Ansprüche, **dadurch gekennzeichnet, dass** die Steuerkennfelder und/oder die Schaltkennfelder anhand konkreter Ist-Parameter des Hybridantriebes (10) berechnet und/oder ermittelt werden.

16. Verfahren nach einem der vorhergehenden Ansprüche, **dadurch gekennzeichnet, dass** die Steuerkennfelder und Schaltkennfelder in einem Steuergerät (26) im Fahrzeug abgelegt sind, auf das der Regenerationsstrategieblock (32) Zugriff hat.

**Claims**

1. Method for controlling a hybrid drive of a vehicle, wherein the hybrid drive comprises, as drive machines, an internal combustion engine and at least one electric machine, and the output shafts of the drive machines are operatively connected to a drive train of the vehicle, wherein, when there is a negative torque request to the drive train of the vehicle, characteristic-diagram-based actuation of the at least one electric machine takes place in the generator operating mode, **characterized in that** a maximum regeneration characteristic curve defines a transition from the regenerative mode to the combined regenerative and mechanical mode.

2. Method according to Claim 1, **characterized in that** the actuation of the at least one electric machine (16) takes place as a function of a setpoint braking torque ($M_{Asoll}$) and a vehicle velocity (v).

3. Method according to one of the preceding claims, **characterized in that** a regeneration strategy block (32) which receives the necessary signals (30) via an interface (28) and which has function modules (36, 38, 40, 42,) which generate control signals (34) for the at least one electric machine (16) is actuated.

4. Method according to Claim 3, **characterized in that** a brake module selector (38) optionally activates different operating modes for the braking as a function of the signals (30) which are applied to the interface (28).

5. Method according to one of the preceding claims, **characterized in that** purely regenerative braking, combined regenerative and mechanical braking and purely mechanical braking are available as operating modes.

6. Method according to one of the preceding claims, **characterized in that** an assembly controller (42) predefines a setpoint torque ($M_{16}$) and/or a setpoint rotational speed ($n_{16}$) for the at least one electric machine (16) as control signals (34).

7. Method according to Claim 6, **characterized in that** the control signals (34) are read out from a control characteristic diagram.

8. Method according to Claim 7, **characterized in that** the control characteristic diagrams (34) take into account as parameters a maximum generator current ($I_c$) of the electric machine (16).

9. Method according to one of the preceding claims, **characterized in that** the control characteristic diagrams are delimited by limiting characteristic curves which limit the operating range of the regeneration of braking energy.

10. Method according to one of the preceding claims, **characterized in that** a minimum regeneration characteristic curve defines a transition at which an active entry of electrical power into an on-board electrical system is possible or the on-board electrical system is loaded with electrical power.

11. Method according to one of the preceding claims, **characterized in that** a switching logic (40) selects a switching stage of a gearbox (14), with which switching stage an optimized generator efficiency level of the electric machine (16) can be achieved.

12. Method according to Claim 11, **characterized in that** the switching logic (40) accesses switching characteristic diagrams.

13. Method according to one of the preceding claims, **characterized in that** the switching logic (40) takes into account actual switching stages which are predefined by a superordinate vehicle controller, in particular adjusts the brake regeneration switching stages when there are deviations of more than one switching stage.

14. Method according to one of the preceding claims, **characterized in that** the switching logic (40) takes into account a gradient of the setpoint delay torque.

15. Method according to one of the preceding claims, **characterized in that** the control characteristic diagrams and/or the switching characteristic diagrams are calculated and/or determined by reference to specific actual parameters of the hybrid drive (10).

16. Method according to one of the preceding claims, **characterized in that** the control characteristic diagrams and switching characteristic diagrams are stored in a control unit (26) in the vehicle, to which control unit (26) the regeneration strategy block (32) has access.

**Revendications**

1. Procédé de commande d'un entraînement hybride d'un véhicule, l'entraînement hybride comprenant comme moteur un moteur à combustion interne et au moins une machine électrique dont les arbres d'entraînement des moteurs peuvent être amenés en liaison active avec une ligne de transmission du véhicule, une commande basée sur la caractéristique de la machine électrique s'effectuant en mode de fonctionnement générateur en cas de demande de couple négative de la ligne de transmission du véhicule,
**caractérisé en ce qu'**
une caractéristique de régénération maximale définit une transition entre le mode régénératif et le mode combiné régénératif et mécanique.

2. Procédé selon la revendication 1,
**caractérisé en ce que**
la commande de la machine électrique (16) s'effectue en fonction d'un couple de freinage de consigne ($M_{Asoll}$) et d'une vitesse du véhicule (v).

3. Procédé selon l'une des revendications précédentes,
**caractérisé en ce que**
la commande s'effectue par un bloc de stratégie de régénération (32) qui reçoit par d'une interface (28) les signaux nécessaires (30) et qui dispose de modules fonctionnels (36, 38, 40, 42) générant les signaux de commande (34) pour la machine électrique (16).

4. Procédé selon la revendication 3,
**caractérisé en ce qu'**
un sélecteur de module de freinage (38) active sélectivement différents modes de fonctionnement pour le freinage en fonction des signaux (30) présents au niveau de l'interface (28).

5. Procédé selon l'une des revendications précédentes,
**caractérisé en ce que**
comme modes de fonctionnement on dispose du freinage purement régénératif, du freinage combiné régénératif et mécanique et du freinage purement mécanique.

6. Procédé selon l'une des revendications précédentes,
**caractérisé en ce qu'**
une commande de groupe (42) prédétermine un couple de consigne ($M_{16}$) et/ou un régime de consigne ($n_{16}$) pour la machine électrique (16) en tant que signaux de commande (34).

7. Procédé selon la revendication 6,
**caractérisé en ce que**
les signaux de commande (34) sont lus à partir d'une caractéristique de commande.

8. Procédé selon la revendication 7,
**caractérisé en ce que**
les caractéristiques de commande (34) prennent en compte comme paramètre un flux de générateur maximum ($I_C$) de la machine électrique (16).

9. Procédé selon l'une des revendications précédentes,
**caractérisé en ce que**
les caractéristiques de commande sont délimitées par des caractéristiques de la région de coupure qui délimitent la plage de fonctionnement de la régénération de l'énergie de freinage.

10. Procédé selon l'une des revendications précédentes,
**caractérisé en ce qu'**
une caractéristique de régénération minimale définit une transition qui permet une entrée active de puissance électrique dans un réseau de bord, ou qui charge le réseau de bord en puissance électrique.

11. Procédé selon l'une des revendications précédentes,
**caractérisé en ce qu'**

une logique de commutation (40) sélectionne un rapport d'une boîte de vitesses (14) permettant d'obtenir un rendement de générateur optimisé de la machine électrique (16).

**12.** Procédé selon la revendication 11,
**caractérisé en ce que**
la logique de commutation (40) renvoie à des caractéristiques de commutation.

**13.** Procédé selon l'une des revendications précédentes,
**caractérisé en ce que**
la logique de commutation (40) prend en compte des rapports réels prédéterminés par une commande pilote de véhicule, et en particulier en cas d'écarts de plus d'un rapport, asservit les rapports de régénération de freinage.

**14.** Procédé selon l'une des revendications précédentes,
**caractérisé en ce que**
la logique de commutation (40) prend en compte un gradient du couple de retard de consigne.

**15.** Procédé selon l'une des revendications précédentes,
**caractérisé en ce que**
les caractéristiques de commande et/ou les caractéristiques de commutation sont calculées et/ou déterminées à l'aide de paramètres réels concrets de l'entraînement hybride (10).

**16.** Procédé selon l'une des revendications précédentes,
**caractérisé en ce que**
les caractéristiques de commande et les caractéristiques de commutation sont stockées dans un appareil de commande (26) dans le véhicule, auquel accède le bloc de stratégie de régénération (32).

30

28

26

32

36    38    40    42

34

10                              22

20

12    14    16    18

24

Fig.1

Fig.2

EP 1 485 266 B1

Fig.3

Fig.4